# EUROPEAN PATENT APPLICATION

(11) **EP 3 057 210 A1**
(43) Date of publication of application: **17.08.2016**
(21) Application number: 16154827.6
(22) Date of filing: 09.02.2016
(51) Int. Cl.: H02M 1/00, H02J 3/00

(54) **WIND TURBINE CONVERTER**

(30) Priority: 10.02.2015 US 201514618338
(71) Applicant: GE Energy Power Conversion Technology Ltd, Rugby Warwickshire CV21 1BU (GB)
(72) Inventor: RITTER, Allen Michael, Salem, VA 24153 (US); BOLLENBECKER, John Leo, Schenectady, NY 12345 (US); CARDINAL, Mark Edward, Schenectady, NY 12345 (US); CUNNINGHAM, John Noel, Atlanta, GA 30339 (US); KLODOWSKI, Anthony Michael, Salem, VA 24153 (US); KURUVILLA, Kuruvilla Pallathusseril, Greenville, SC 29615 (US); WAGONER, Robert Gregory, Salem, VA 24153 (US); XU, Chunchun, Salem, VA 24153 (US)
(74) Representative: Serjeants LLP

(57) **Abstract**

A wind turbine system (500) is provided. In various embodiments, the system includes a nacelle (302) supported by a tower. At least one rotor blade (308) is rotatably connected with the nacelle (302) to capture wind energy. The at least one rotor blade (308) rotates relative to the nacelle (302) for generating electricity. A generator (318) is coupled to the nacelle (302) for converting the wind energy into electrical energy. A transformer-converter assembly (340) comprises a converter (324) and a transformer (328) such that the converter (324) is integrally connected to the transformer (328). An electrical and control module (400) is electronically coupled to the generator (318) and the transformer-converter assembly (340).

## Description

### I. FIELD OF THE INVENTION

The present invention relates generally to wind turbines. More particularly, the present invention relates to positioning of wind turbine power generators.

### II. BACKGROUND OF THE INVENTION

In recent years, as the supply of our fossil energy resources, such as oil and coal, decreases and the prices and the effort to recover them increase, alternative energy resources, for example, such as wind energy produced by wind turbines, have become popular for supplying the increasing demand for electric power. Wind turbines are one type of renewable energy-based power unit that competes with traditional forms of electric power generation. As a result, wind turbines capture wind energy and convert it to electrical energy in a cost effective, reliable, and safe manner such that it is suitable for delivery miles away.

In operation, the wind turbines may include multiple rotating blades that are connected to a rotor shaft and rotated by the wind. The rotation of the blades by the wind spins the rotor shaft to generate a rotational torque or force that drives one or more generators to convert mechanical energy to electrical energy. The rotor shaft and generator are mounted within a housing or nacelle that is positioned on top of a truss or tubular tower. The electrical energy generated in the nacelle is distributed down through the tower to a utility grid via a transformer.

Wind energy has several applications, ranging from large fields of wind turbines, interconnected and delivering power to the utility grid, to individual, isolated wind turbines that may or may not be grid-connected. As such, wind turbines can be used to produce electricity for a single home or building, or they can be connected to an electricity grid for more widespread electricity distribution. The interconnection of the wind turbines to the electrical grid can be grouped into classifications based on the size of the installations, the size of the contribution to a total electricity supply (wind penetration), whether the electricity is used for frequency or reactive power, and the degree of integration with other power sources.

Some wind turbine configurations include doubly fed induction generators (DFIGs). Such configurations may also include alternating current (AC) - direct current (DC) - AC frequency converters that are used to convert a frequency of generated electric power to a frequency substantially similar to a utility grid frequency. Moreover, such converters, in conjunction with the DFIG, also transmit electric power between the utility grid and the generator as well as transmit generator excitation power to a wound generator rotor from one of the connections to the electric utility grid connection.

Alternatively, some wind turbine configurations include, but are not limited to, alternative types of induction generators, permanent magnet (PM) synchronous generators and electrically-excited synchronous generators and switched reluctance generators. These alternative configurations may also include power converters that are used to convert the frequencies as described above and transmit electrical power between the utility grid and the generator.

In some known wind turbines, the nacelle of a wind turbine contains the essential machinery and power electronic devices that enable the efficient conversion of wind energy into electrical energy such as the generator and possibly the power converter. As heart of a wind turbine, the nacelle must function reliably and cost efficiently throughout the service life of the wind turbine. Usually, the space inside the nacelle is limited and a high number of power cables or bus-bars are used to connect the individual power electronic components, which add costs. Thus sometimes, the converter is in the lower part of a wind turbine tower.

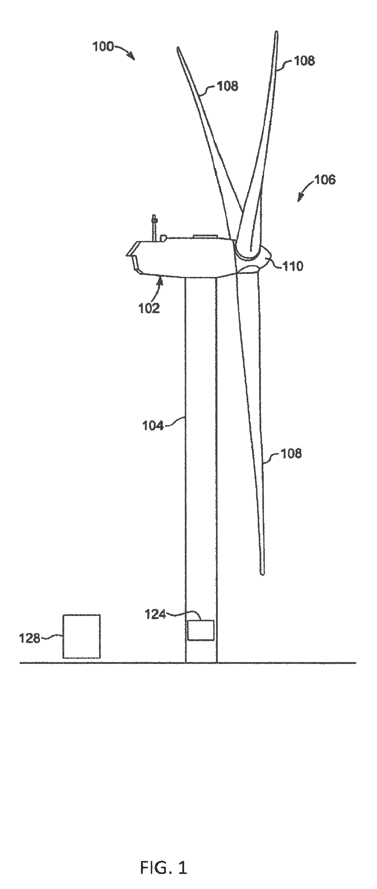

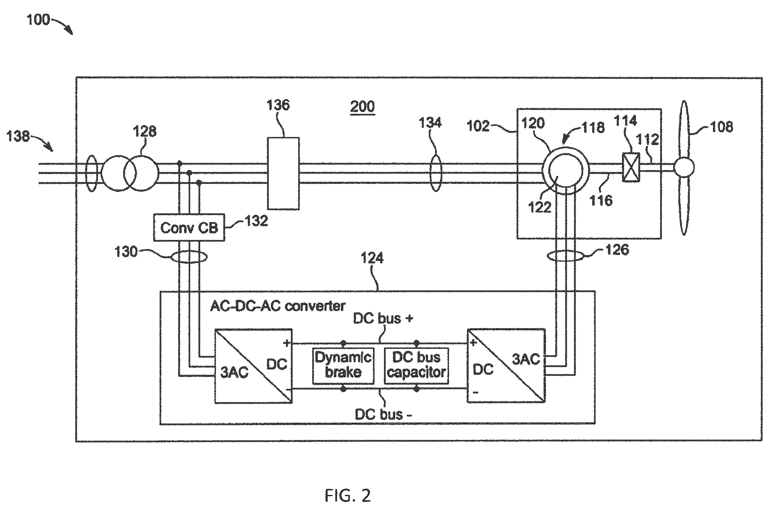

FIG. 1 is a perspective view of a portion of an exemplary DFIG wind turbine system 100. Wind turbine 100 includes a nacelle 102 housing a generator 118 (shown in FIG. 2). Nacelle 102 is mounted on a tower 104 (a portion of tower 104 being shown in FIG. 1). Tower 104 may have any suitable height that facilitates operation of wind turbine 100. Wind turbine 100 also includes a rotor 106 that includes three blades 108 attached to a rotating hub 110. Alternatively, wind turbine 100 includes any number of blades 108 that facilitates operation of wind turbine 100. In the exemplary embodiment, wind turbine 100 includes a gearbox 114 (shown in FIG. 2) operatively coupled to rotor 106 and a generator 118 (shown in FIG. 2).

FIG. 2 is a schematic view of an exemplary electrical and control system 200 that may be used with wind turbine 100. Rotor 106 includes blades 108 coupled to hub 110. Rotor 106 also includes a low-speed shaft 112 rotatably coupled to hub 110. Low-speed shaft 112 is coupled to a step-up gearbox 114 that is configured to step up the rotational speed of low-speed shaft 112 and transfer that speed to a high-speed shaft 116. In the exemplary embodiment, gearbox 114 has any suitable step-up ratio that facilitates operation of wind turbine 100.

High-speed shaft 116 is rotatably coupled to generator 118. In the exemplary embodiment, generator 118 can be configured as a wound rotor, three-phase, asynchronous DFIG that includes a generator stator 120 magnetically coupled to a generator rotor 122.

During operation, the wind turns the propellers 108 attached to gearbox 114 inside the nacelle 102, coupled to generator 118. The wind turbine system 100 includes an AC-DC-AC converter 124 (shown in FIG. 2) which controls the generator 118 through rotor bus 126. Converter 124 also connects to an oil-filled pad mounted transformer 128 through line bus 130 and converter circuit breaker (CB) 132. Generator 118 connects to the transformer 128 through stator bus 134 and stator sync switch 136. The oil-filled pad mounted transformer 128 steps up the voltage and feeds power to the high voltage (HV) utility grid 138.

In some known wind turbines, the converter 124 is located in the lower part of the wind turbine tower 104 and the oil-filled pad mounted transformer 128 is located outside of the tower 104, as exemplified in FIG. 1. In FIG. 1, the converter 124 and the oil-filled pad mounted transformer 128 are separate and independent components. The maximum efficiency for a wind turbine is achieved at the generator frequency and voltage rather than the grid frequency. This makes it necessary to include an AC-DC-AC frequency converter within the system. However, the AC-DC-AC frequency converter can be expensive, unreliable, complicated and have a high power loss.

Furthermore, known wind turbines have a plurality of mechanical and electrical components, which may have independent or different operating limitations, such as current, voltage, power, and/or temperature limits, than other components. Many of the electrical and/or mechanical components come together for the first time after being installed in the wind turbine.

For this purpose, it will be appreciated that easy testing of the mechanical and power electronic components before installation, to ensure an optimum compatibility between the components and an efficient, harmonious, long-lasting and trouble-free operation of the wind turbine is desired. Further, easy repair and exchange of faulty parts as well as the reduction of material costs inside the wind turbine and an increase in overall efficiency of the wind turbine is desirable.

### III. SUMMARY OF EMBODIMENTS OF THE INVENTION

Given the aforementioned deficiencies, a need exists for improved assembly methods and systems, in particular with respect to transformers and power converters. These improved assembly methods and systems are needed to achieve the aforementioned cost, reliability, spatial, material and maintenance benefits. A need also exists to provide a system and method that easily eliminates water, improves cooling, and improves isolation. It may be desirable to provide a system and method that offers higher power density and higher reliability.

In certain embodiments, a wind turbine system is provided. In various embodiments, the system includes a nacelle supported by a tower. At least one rotor blade is rotatably connected with the nacelle to capture wind energy. The at least one rotor blade rotates relative to the nacelle for generating electricity. A generator is coupled to the nacelle for converting the wind energy into electrical energy. A transformer-converter assembly comprises a converter and a transformer such that the converter is integrally connected to the transformer. An electrical and control module is electronically coupled to the generator and the transformer-converter assembly.

The converter can be housed within the transformer such that the converter is mechanically attached to the transformer. The nacelle can be configured to capture wind energy such that the at least one rotor blade rotates relative to the nacelle for generating electricity.

The transformer-converter assembly can house all electrical components disposed in a power flow path.

The transformer can comprise an oil-filled pad mounted transformer.

The converter can comprise an AC-DC-AC frequency converter.

The generator can comprise a double fed induction generator (DFIG).

The transformer-converter assembly can be attached to at least one of the nacelle, the tower or a base of a wind turbine.

The transformer-converter assembly can be positioned nearby a wind turbine.

In other embodiments, a method is provided for generating electricity, which includes supporting a nacelle by a tower; connecting at least one rotor blade with the nacelle to capture wind energy such that the at least one rotor blade rotates relative to the nacelle for generating electricity; coupling a generator to the nacelle and for converting the wind energy into electrical energy; providing a transformer-converter assembly, comprising: a converter; a transformer; and wherein the converter is integrally connected to the transformer; and electronically coupling an electrical and control module to the generator and the transformer-converter assembly.

Further features and advantages, as well as the structure and operation of various embodiments, are described in detail below with reference to the accompanying drawings. The invention is not limited to the specific embodiments described herein. The embodiments are presented for illustrative purposes only. Additional embodiments will be apparent to persons skilled in the relevant art(s) based on the teachings contained herein.

### IV. BRIEF DESCRIPTION OF THE DRAWINGS

FIG. 1 is a schematic and block diagram of an example of a DFIG wind power system for use with the wind turbine shown in FIG. 2;
FIG. 2 is a perspective view of a portion of an exemplary wind turbine;
FIG. 3 is a perspective view of a portion of an exemplary wind turbine in accordance with the present disclosure;
FIG. 4A is a perspective view of a portion of another exemplary wind turbine in accordance with a second embodiment of the present disclosure;
FIG. 4B is a perspective view of a portion of another exemplary wind turbine in accordance with a third embodiment of the present disclosure;
FIG. 5 is schematic and block diagram of an example of a DFIG wind power system in accordance with the present disclosure; and
FIG. 6 is a flowchart of an exemplary method of practicing the present invention in accordance with the present disclosure.

The present disclosure may take form in various components and arrangements of components, and in various process operations and arrangements of process operations. The present disclosure is illustrated in the accompanying drawings, throughout which, like reference numerals may indicate corresponding or similar parts in the various figures. The drawings are only for purposes of illustrating preferred embodiments and are not to be construed as limiting the disclosure. Given the following enabling description of the drawings, the novel aspects of the present disclosure should become evident to a person of ordinary skill in the art.

### V. DETAILED DESCRIPTION OF VARIOUS EMBODIMENTS

The following detailed description is merely exemplary in nature and is not intended to limit the applications and uses disclosed herein. On the contrary, the disclosure is intended to cover alternatives, modifications, and equivalents. For example, features illustrated or described as part of one embodiment can be used on or in conjunction with other embodiments to yield yet further embodiments. It is intended that the present disclosure includes such modifications and variations. Further, there is no intention to be bound by any theory presented in the preceding background or summary or the following detailed description. While embodiments of the present technology are described herein primarily in connection with DFIG wind power systems, the concepts are also applicable to other types of wind turbine system having a converter such as full power converter wind power systems or other similar systems with a converter.

Throughout the application, description of various embodiments may use "comprising" language, however, it will be understood by one of skill in the art, that in some specific instances, an embodiment can alternatively be described using the language "consisting essentially of" or "consisting of."

For purposes of better understanding the present teachings and in no way limiting the scope of the teachings, it will be clear to one of skill in the art that the use of the singular includes plural unless specifically stated otherwise. Therefore, the terms "a," "an" and "at least one" are used interchangeably in this application.

As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

As used herein, the term "converter" is intended to be representative of an AC-DC-AC power converter optionally including a DC link. Further, the term "converter" may also be representative of an AC-DC power converter or a DC-AC power converter both optionally with part of a DC link. As used herein the term "full frequency converter" is intended to be representative of a converter that is able to convert frequencies in the range of 0 to 200 Hz or more.

As used herein the term "generator-side converter" is intended to be representative of the portion of a power converter that is linked with the rotor or stator of a power generator, and usually includes an AC-DC converter and optionally part of a DC link. As used herein the term "line-side converter" is intended to be representative of the portion of a power converter that is linked with an electrical supply grid, and usually includes a DC-AC converter and optionally part of a DC link.

As used herein, the term "inside the tower" is intended to be representative of any location inside a wind turbine base, tower or nacelle. As used herein, the term "outside the tower" is intended to be representative of any location outside of a wind turbine.

The embodiments described herein include a wind turbine system that includes an oil-filled transformer that houses a converter and all electrical components in the power flow path to form a transformer-converter assembly. Thus, the converter can be mechanically attached or integrally connected to the oil-filled transformer. The transformer-converter assembly can be mechanically attached to or positioned nearby a wind turbine. Hence, in one embodiment, the transformer-converter assembly may be mechanically attached to the wind turbine nacelle, base or tower. In another embodiment, the transformer-converter assembly may be located nearby the tower.

Attaching the converter in or on the oil-filled pad mounted transformer allows for an integrated packaging of the system and frees up space. Through the compact and integrated design, material savings may be made, because the converter and the transformer may include a number of the same pieces.

In further embodiments herein, the transformer-converter assembly may be attached somewhere along and around the nacelle. Hence, easy access to the transformer-converter assembly would be enabled. Not limited to a particular embodiment the transformer-converter assembly may be attached to the nacelle mechanically or physically, for instance, by welding, screwing, bolting or any other friction/form fit that may, for example, include magnetic or adhesive forces.

In embodiments herein, the individual DC links of the one or more separate full frequency AC-DC and DC-AC converters may be connected to a DC collector system directly. The DC collector system may connect the individual DC links of AC-DC generator-side converters of more than one wind turbine for instance of an on-or offshore wind park in series or parallel to one or more central full frequency DC-AC line-side converters. In a similar fashion one or more full frequency AC-DC-AC converters of more than one wind turbine for instance of an on- or offshore wind park may be connected in series or parallel before eventually being fed into an electrical supply grid.

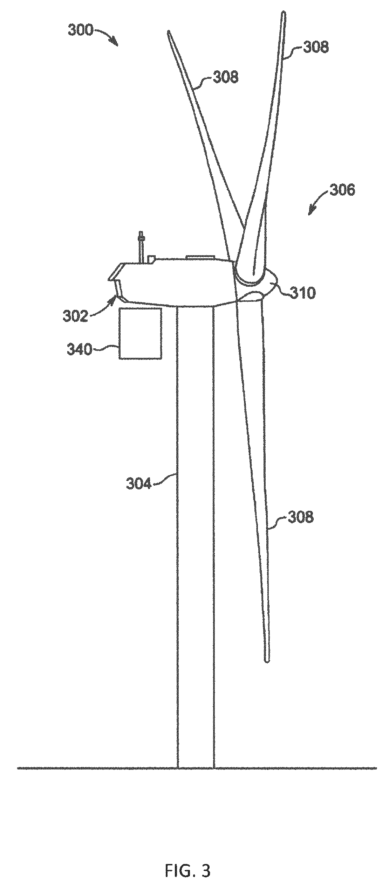

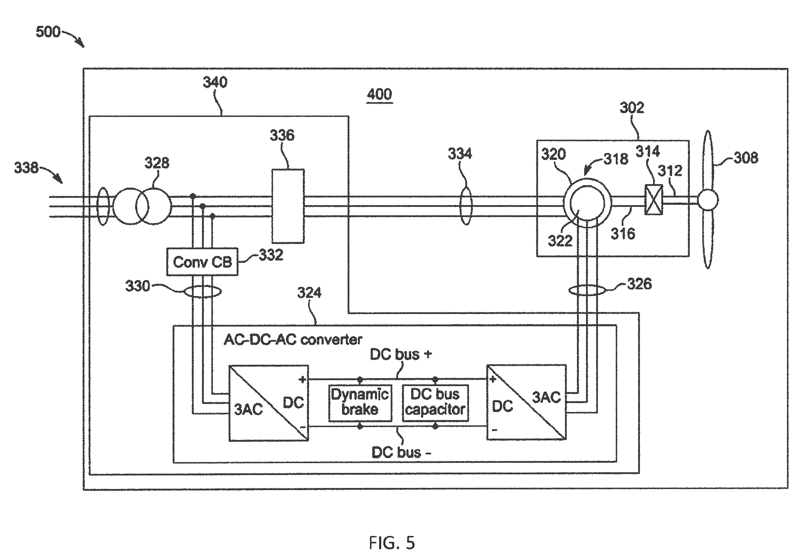

FIGS. 3-4 illustrate a perspective view of a portion of an exemplary wind turbine 300. Wind turbine 300 includes a nacelle 302 housing a generator 318 (shown in FIG. 5). Nacelle 302 is mounted on a tower 304 (a portion of tower 304 being shown in FIGS. 3-4). Tower 304 may have any suitable height that facilitates operation of wind turbine 300 as described herein. Wind turbine 300 also includes a rotor 306 that includes three blades 308 attached to a rotating hub 310. Alternatively, wind turbine 300 includes any number of blades 308 that facilitates operation of wind turbine 300 as described herein.

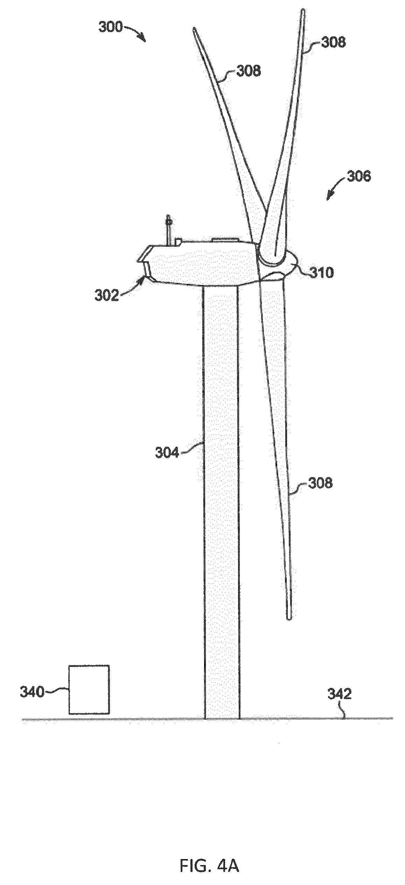

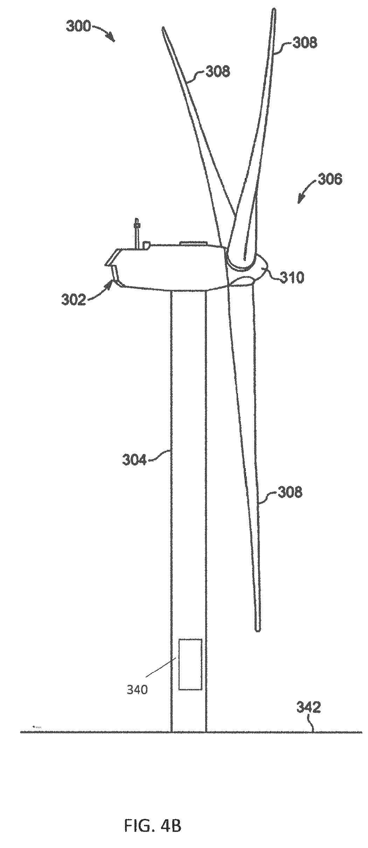

Also included, is a transformer-converter assembly 340, discussed in greater detail below. In FIG. 3, by way of example only and not limitation, the transformer-converter assembly 340 is shown positioned proximate to the nacelle 302. In a second embodiment illustrated in FIG. 4A, however, the transformer-converter assembly 340 is shown positioned at the base of the tower 304. FIG. 4B is an illustration of a third embodiment depicting the transformer-converter assembly 340 inside of the base of the tower 304.

In the exemplary embodiment, wind turbine 300 includes a gearbox 314 (shown in FIG. 5) operatively coupled to rotor 306 and a generator 318 (shown in FIG. 5).

FIG. 5 is a schematic view of an exemplary electrical and control system 400 that may be used with wind turbine 300. Rotor 306 includes blades 308 coupled to hub 310. Rotor 306 also includes a low-speed shaft 312 rotatably coupled to hub 310. Low-speed shaft 312 is coupled to a step-up gearbox 314 that is configured to step up the rotational speed of low-speed shaft 312 and transfer that speed to a high-speed shaft 316. In the exemplary embodiment, gearbox 314 has any suitable step-up ratio that facilitates operation of wind turbine 300. As a further alternative, wind turbine 300 includes a direct-drive generator that is rotatably coupled to rotor 306 without any intervening gearbox.

High-speed shaft 316 is rotatably coupled to generator 318. In the exemplary embodiment, generator 318 can be configured as a wound rotor, three-phase, DFIG that includes a generator stator 320 magnetically coupled to a generator rotor 322. In an alternative embodiment, generator rotor 322 includes a plurality of permanent magnets in place of rotor windings. Hence, in general, and not limited to a particular embodiment the generator may be any type of synchronous generator with electrical excitation.

During operation, the wind turns the propellers 308 attached to gearbox 314 inside the nacelle 302, coupled to generator 318. The wind turbine system 300 includes an AC-DC-AC converter 324 (shown in FIG. 5) which controls the generator 318 through rotor bus 326. Converter 324 also connects to an oil-filled pad mounted transformer 328 through line bus 330 and converter CB 332. Generator 318 connects to the transformer 328 through stator bus 334 and stator sync switch 336. The oil-filled pad mounted transformer 328 steps up the voltage and feeds power to the HV utility grid 338.

In FIG. 5, wind turbine system 500 is configured such that oil-filled transformer 328 houses converter 324 and all electrical components in the power flow path to form the transformer-converter assembly 340. Namely, transformer-converter assembly 340 is configured to include a set of components assembled together to make a finished product. Thus, the converter 324 can be mechanically attached or integrally connected to the oil-filled transformer 328. The transformer-converter assembly 340 can be mechanically attached to or positioned nearby a wind turbine. Hence, in one embodiment, as shown in FIG. 3, the transformer-converter assembly 340 may be mechanically attached to the wind turbine nacelle, base or tower. In another embodiment, as shown in FIG. 4A, the transformer-converter assembly 340 may be located nearby the tower.

Attaching the converter 324 in or on the oil-filled pad mounted transformer 328 allows for an integrated packaging of the system and frees up space. Through the compact and integrated design, material savings may be made, because the converter and the transformer may include a number of the same pieces.

In further embodiments herein, the transformer-converter assembly 340 may be attached somewhere along and around the nacelle, as shown in FIG. 3. Hence, easy access to the transformer-converter assembly 340 would be enabled. Not limited to a particular embodiment the transformer-converter assembly 340 may be attached to the nacelle mechanically or physically, for instance, by welding, screwing, bolting or any other friction/form fit that may, for example, include magnetic or adhesive forces.

The electrical and control system 400 may comprise a turbine controller (not shown). In various embodiments, the turbine controller can include at least one processor and a memory, at least one processor input channel, at least one processor output channel, and may include at least one computer. As used herein, the term computer is not limited to integrated circuits referred to in the art as a computer, but broadly refers to a processor, a microcontroller, a microcomputer, a programmable logic controller (PLC), an application specific integrated circuit, and other programmable circuits, and these terms are used interchangeably herein.

In the exemplary embodiment, memory may include, but is not limited to, a computer-readable medium, such as a random access memory (RAM). Alternatively, one or more storage devices, such as a floppy disk, a compact disc read only memory (CD-ROM), a magneto-optical disk (MOD), and/or a digital versatile disc (DVD) may also be used. Also, in the exemplary embodiment, additional input channels may be, but are not limited to, computer peripherals associated with an operator interface such as a mouse and a keyboard. Further, in the exemplary embodiment, additional output channels may include, but are not limited to, an operator interface monitor.

Processors are provided for the turbine controller to process information transmitted from a plurality of electrical and electronic devices that may include, but are not limited to, voltage and current transducers. RAM and/or storage devices store and transfer information and instructions to be executed by the processor. RAM and/or storage devices can also be used to store and provide temporary variables, static (i.e., non-changing) information and instructions, or other intermediate information to the processors during execution of instructions by the processors. Instructions that are executed include, but are not limited to, resident conversion and/or comparator algorithms. The execution of sequences of instructions is not limited to any specific combination of hardware circuitry and software instructions.

The turbine controller (not shown) may also be configured to receive a plurality of voltage and electric current measurement signals from voltage and electric current sensors. Moreover, turbine controller may be configured to monitor and control at least some of the operational variables associated with wind turbine 500.

During operation, wind impacts blades 308 and blades 308 transform wind energy into a mechanical rotational torque that rotatably drives low-speed shaft 312 via hub 310. Low-speed shaft 312 drives gearbox 314 that subsequently steps up the low rotational speed of low-speed shaft 312 to drive high-speed shaft 316 at an increased rotational speed. High speed shaft 316 rotatably drives generator rotor 322. A rotating magnetic field is induced by generator rotor 322 and a voltage is induced within generator stator 320 that is magnetically coupled to generator rotor 322. In this exemplary embodiment, generator 318 converts the rotational mechanical energy to a sinusoidal, three-phase AC electrical energy signal in generator stator 320. The associated electrical power is transmitted to transformer 328 via stator bus 334 and stator synchronizing switch 336. Transformer 328 steps up the voltage amplitude of the electrical power and the transformed electrical power is further transmitted to a grid 338.

FIGS. 3 and 4 illustrate different locations of the transformer-converter assembly 340, which includes converter 324 and all electrical components in the power flow path housed within transformer 328 according to embodiments described herein. In various embodiments, the transformer 328 may be an oil-filled pad mounted transformer. In some typical wind turbines, as illustrated in FIGS. 1 and 2, the converter 124 and the oil-filled pad mounted transformer 128 are separate and independent components, which are positioned at different locations within the wind turbine system. Converter 124 is located in the lower part of the wind turbine tower, and the oil-filled pad mounted transformer 128 is located outside of the tower.

In FIG. 3, the transformer-converter assembly 340, which includes the converter housed within the transformer, may be mechanically attached to the wind turbine nacelle, base or tower. In various embodiments, transformer-converter 340 may be attached somewhere along and around the nacelle. Not limited to a particular embodiment the transformer-converter assembly 340 may be attached to portions of the wind turbine mechanically or physically, for instance, by welding, screwing, bolting or any other friction/form fit that may, for example, include magnetic or adhesive forces.

FIG. 4A illustrates positioning transformer-converter assembly 340 nearby the tower of wind turbine 300. Transformer-converter assembly 340 may be positioned above or below surface 342. In this case, surface 342 may be representative of onshore ground level. However, in further embodiments, surface 342 may be, for example, water in an offshore environment.

In addition, and not limited to a particular embodiment described herein, a single transformer-converter assembly may be connected to a plurality of transformer-converter assemblies of one or more wind turbines. Such layout enables a plurality of wind turbines to be interconnected to form, for example, an on- or offshore wind park with more redundancy, and further reduction in spatial and material requirements.

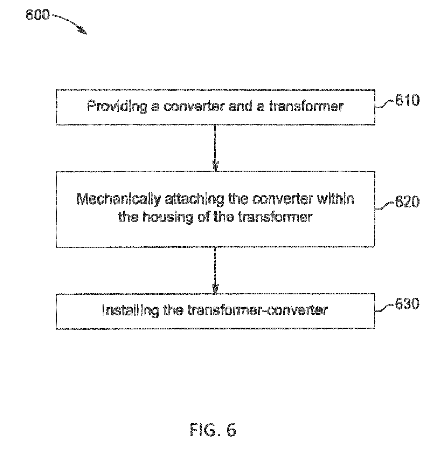

FIG. 6 is a flow chart of an exemplary method 600 for attaching a converter to a transformer of a wind turbine. In block 610, a converter and a transformer are provided. The converter is mechanically attached to the transformer such that the transformer houses the converter and all electrical components in the power flow path to form a transformer-converter assembly, in block 620. Typically, now the electrical energy flow between the converter and transformer may be tested. Finally, in block 630, the transformer-converter assembly is installed such that it is attached to a nacelle, a base or a tower of a wind turbine or, alternatively, positioned nearby the wind turbine.

The above-described systems and methods facilitate a more compact assembly of the transformer and converter, and also enable testing and harmonizing the two components with each other before installation. More specifically, installing the converter within the transformer frees space in the wind turbine. Additionally, material costs are reduced through shortened cooling system connections, reduced cable and conventional generator connections. Finally, due to the reduced cabling and connections, in case of malfunctions or normal wear through use, it is easy to exchange the transformer-converter assembly.

Exemplary embodiments of systems and methods for a wind turbine system including a transformer housing a converter are described above in detail. The systems and methods are not limited to the specific embodiments described herein, but rather, components of the systems and/or steps of the methods may be utilized independently and separately from other components and/or steps described herein. For example, attaching the transformer-converter assembly on the nacelle of a vertical wind turbine, and hence are not limited to practice with only the wind turbine systems as described herein. Rather, the exemplary embodiment can be implemented and utilized in connection with many other generators or converter applications in for, for instance, other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A transformer-converter assembly (340) to be attached to or positioned nearby a wind turbine system (300; 500), the transformer-converter assembly (340) comprising a transformer (328) and a converter (324) mechanically attached or integrally connected to the transformer (328).

2. A transformer-converter assembly (340) according to claim 1, wherein the converter (324) is housed within the transformer (328), e.g., located within a transformer enclosure.

3. A transformer-converter assembly (340) according to claim 1 or claim 2, housing all electrical components disposed in a power flow path.

4. A transformer-converter assembly (340) according to any preceding claim, wherein the transformer comprises an oil-filled transformer (328).

5. A transformer-converter assembly (340) according to any preceding claim, wherein the converter comprises an AC-DC-AC power converter (324).

6. A wind turbine system (300; 500), comprising:
a nacelle (302) supported by a tower (304);
a generator (318) housed within the nacelle for converting wind energy into electrical energy;
a transformer-converter assembly (340) according to any preceding claim; and
an electrical and control module (400) electronically coupled to the generator (318) and the transformer-converter assembly (340).

7. A wind turbine system (300; 500) according to claim 6, wherein the generator comprises a double fed induction generator (318).

8. A wind turbine system (300; 500) according to claim 7, wherein the converter (324) is electrically connected to the rotor (322) of the generator (318) and the transformer (328) is electrically connected to the stator (320) of the generator (318).

9. A wind turbine system (300; 500) according to any of claims 6 to 8, wherein the transformer-converter assembly (340) is attached to the nacelle (302).

10. A wind turbine system (300; 500) according to any of claims 6 to 8, wherein the transformer-converter assembly (340) is located inside the tower (304).

11. A wind turbine system (300; 500) according to any of claims 6 to 8, wherein the transformer-converter assembly (340) is positioned outside the tower (304), optionally nearby a base of the tower (304).

12. A method for generating electricity, the method comprising:
supporting a nacelle (302) by a tower (304);
connecting at least one rotor blade (308) with the nacelle (302) to capture wind energy such that the at least one rotor blade (308) rotates relative to the nacelle (302);
coupling a generator (318) to the nacelle (302) to convert the captured wind energy into electrical energy;
providing a transformer-converter assembly (340), comprising:
a converter (324);
a transformer (328);
wherein the converter (324) is integrally connected to the transformer (328); and
electronically coupling an electrical and control module (400) to the generator (318) and the transformer-converter assembly (340).

13. A method according to claim 12, further comprising attaching the transformer-converter assembly (340) to the nacelle (302).

14. A method according to claim 12, further comprising locating the transformer-converter assembly (340) inside the tower (304).

15. A method according to claim 12, further comprising positioning the transformer-converter assembly (340) outside the tower (304), optionally nearby a base of the tower (304).
